# FASCICULE DE BREVET EUROPEEN

(11) **EP 0 713 648 B1**
(45) Date de publication et mention de la délivrance du brevet: **14.08.2002**
(21) Numéro de dépôt: 95402606.8
(22) Date de dépôt: 21.11.1995
(51) Int. Cl.: A21D 2/02

(54) **Nouvelle composition d'acides levants**
Backtriebsäurezusammensetzung
Leavening acid composition

(30) Priorité: 22.11.1994 US 344322
(43) Date de publication de la demande: 29.05.1996
(73) Titulaire: RHODIA INC., Cranbury, New Jersey 08512 (US)
(72) Inventeur: Chung, Frank H.Y., Langhorne, PA (US)
(74) Mandataire: Ricalens, François

(56) Documents cités:
- EP-A- 0 350 607
- FR-A- 1 060 943
- US-A- 2 160 232

## Description

### 1. Domaine de l'invention

La présente invention concerne des compositions d'acide levant (levure chimique) destinées à la pâtisserie et plus particulièrement les acides levants à base de phosphate monocalcique qui possèdent d'excellentes propriétés de libération contrôlée.

### 2. Description de la technologie

Les produits levants chimiques sont connus depuis plus de 100 ans. Le remplacement de la levure utilisée pour lancer le processus de fermentation à l'aide un alcali à base de carbonate neutralisé par un acide a permis de gagner du temps et de réduire le matériel nécessaire à la préparation des pâtisseries. Depuis le début, on a inventé diverses compositions levantes vendues sous la forme de poudres levantes contenant non seulement l'alcali levant et l'acide utilisé pour le neutraliser, mais aussi des charges permettant de faciliter les mesures, la manipulation et le stockage desdites poudres levantes.

Pendant longtemps, on a considéré que les systèmes levants comprenaient deux ingrédients de base. Le premier, bien entendu, est l'acide levant, telle que le bitartrate de potassium, divers acides phosphoriques, tels que l'acide orthophosphorique, l'acide pyrophosphorique et leurs sels partiels, tels que le phosphate monocalcique, le pyrophosphate acide de sodium et tous les autres acides non toxiques alimentaires qui conviennent et ne communiquent pas de mauvais goût à la pâtisserie finale. Lesdits acides sont appelés "acidulants" ou "acides pâtissiers", mais sont connus plus communément sous la désignation d"acides levants".

Lorsqu'on l'ajoute à une pâte liquide ou à une pâte à gâteaux, l'acide réagit avec un composé qui libère du bioxyde de carbone et qui est contenu dans la pâte liquide ou la pâte à gâteaux afin de fournir le gaz nécessaire à la levée. La vitesse de libération du gaz est un point important qui détermine grandement le volume, la densité et la texture de la pâtisserie finale. La vitesse en question doit se situer à l'intérieur de limites plutôt étroites pour certaines applications, telle que la fabrication de pâte préparée en boîte pour les biscuits. Les conditions exigées pour la levée varient grandement selon les différentes pâtisseries, chacune demandant une vitesse de libération particulière pour que des produits de très grande qualité soient obtenus.

L'un des principaux facteurs en ce qui concerne la vitesse de libération du bioxyde de carbone est la réactivité du produit donnant naissance au bioxyde de carbone.

Lorsque l'on met en oeuvre des acides levants, l'un des premiers objectifs est de moduler et de maîtriser la cinétique de la libération du bioxyde de carbone afin d'obtenir finalement une bonne pâtisserie. Il convient plus particulièrement de limiter la réactivité de l'eau avec l'acide levant. L'idéal serait que l'acide levant soit conçu de façon à ce qu'il ne réagisse pas durant le pétrissage ou le stockage de la pâte au froid et qu'il réagisse, au contraire, pendant la cuisson lorsque le produit final lève.

Les acides levants particulièrement utiles sont les produits à base de phosphate et, plus particulièrement, le phosphate monocalcique. Il est souhaitable que cet acide soit candidat à la commercialisation, car il ne contient pas de sodium et ne laisse pas d'arrière-goût. Si le phosphate monocalcique ne contient pas de sodium, il est difficile d'en maîtriser correctement la vitesse de réaction ce qui aboutit à libérer du bioxyde de carbone à différentes étapes du cycle. Le problème fondamental que pose la mise en oeuvre du phosphate monocalcique est la vitesse trop rapide de libération du gaz. Il en résulte que son utilisation commerciale a été généralement limitée à faire partie d'un mélange d'acides levants. Ces mélanges peuvent ne pas être tout à fait parfaits, car ils peuvent contenir du sodium, par exemple, des mélanges de phosphate monocalcique avec de l'aluminophosphate de sodium ou du pyrophosphate de sodium ou bien ils peuvent avoir un goût.
Il est connu de réguler la vitesse de dégagement du bioxyde de carbone en contrôlant la réactivité de l'acide levant. Dans l'état de la technique, on trouve de nombreuses tentatives de contrôle de la vitesse de réaction de l'acide levant. Parmi les exemples caractéristiques, on peut citer le brevet US n° 3 034 899 de Tucker dans lequel un sel de calcium finement divisé est combiné avec l'acide en vue de contrôler la vitesse de réaction.

Les sels de calcium ont été mis en oeuvre très tôt dans les compositions levantes chimiques. On trouve un exemple caractéristique de cette utilisation dans le brevet US n° 315 831 de Peters. Toutefois, les sels de calcium décrits dans le brevet de Peters ont une action relativement lente et ne donnent pas satisfaction comme facteur carbonate, notamment par rapport aux sels de métaux alcalins. Bien que les sels de calcium, tel que le carbonate de calcium, aient été utilisés à des fins diverses, tels que agents de conservation de l'acide levant, etc., comme indiqué dans les brevets US n° 4 388 336 et 4 526 801, lesdits carbonates ne présentent pas la réactivité recherchée pour obtenir un facteur carbonate dans les pâtisseries.

Dans l'art antérieur, on trouve la description de la mise en oeuvre de phosphate monocalcique dit "enrobé", le phosphate monocalcique étant revêtu d'une fine couche de phosphate enrobant son noyau acide. Cependant, l'''enrobage" n'apporte pas la cinétique réactive idéale et ne peut être utilisé que comme élément d'un mélange. Des produits de ce type sont décrits dans le brevet US n° 2 160 232. Pour obtenir les produits enrobés, on soumet le phosphate monocalcique de départ à un traitement thermique à une température supérieure à environ 140°C. Ce document précise encore que les produits ne doivent pas être chauffés à une température supérieure à 230°C, car on considère que cela pourrait provoquer une transformation rapide de l'acide levant en pyrophosphate. Le document indique encore que l'indice de neutralisation, c'est-à-dire la quantité de bicarbonate de sodium qui est complètement neutralisée par 100 parties en poids de phosphate acide, des acides ainsi obtenus se situe entre environ 83 et 88. Si cette technique a amélioré le contrôle de la réactivité du phosphate monocalcique, ses résultats restent, toutefois, inférieurs à ceux que l'on obtient avec les acides levants contenant du sodium, tels que le pyrophosphate acide de sodium et l'aluminophosphate de sodium.

Le brevet US n° 2 160 700 enseigne que l'on peut obtenir du phosphate monocalcique anhydre par cristallisation à partir d'une solution acide. Ce brevet décrit également un procédé préférentiel permettant d'obtenir un phosphate monocalcique anhydre cristallin. Dans ce procédé, on ajoute un léger excès de chaux à une solution d'acide phosphorique relativement concentrée afin d'obtenir spontanément une température réactionnelle supérieure à 140°C. On maîtrise la température dans un domaine supérieur à 140°C, mais inférieur à la température à laquelle il se forme des quantités importantes de pyrophosphate. On contrôle généralement la température en agissant sur la vitesse d'addition de la chaux. On poursuit la réaction jusqu'à ce que l'on obtienne une masse très sèche de phosphate monocalcique anhydre solide.

Le brevet US n° 3 109 738 concerne une composition d'acides levants qui est un mélange d'aluminophosphate de sodium et de phosphate monocalcique anhydre. Cette composition met en évidence les excellentes propriétés de libération, mais nécessite la mise en oeuvre d'un acide contenant du sodium.

Le brevet EP 0 350 607 décrit une composition d'acides levants à base de dihydrogénodiphosphate de calcium. Cette composition d'acides levants permet d'obtenir une vitesse de réaction plus ou moins constante d'environ 20 qui n'est pas ou peu modulable.

Le brevet US n° 3 954 939 concerne un phosphate monocalcique ayant une tendance réduite à s'agglomérer, obtenu en ajoutant de l'eau à une composition de phosphate monocalcique ayant une perte au feu comprise entre environ 14 et environ 17 %, l'eau et le phosphate monocalcique pouvant rester en contact pendant un temps suffisamment long pour qu'il se forme une composition de phosphate monocalcique hydraté ayant une perte au feu comprise entre 17 et 21,7 %, et en séchant la composition de phosphate monocalcique jusqu'à ce que sa teneur en humidité libre soit inférieure à 1 % et, de préférence, inférieure à environ 0,5 % si le mélange à une teneur en humidité libre supérieure à ce niveau.

Il serait donc souhaitable d'obtenir un acide levant à base de phosphate monocalcique dont on pourrait contrôler parfaitement les propriétés de dégagement du gaz en vue de multiples applications en pâtisserie.

### Exposé succinct de l'invention

Selon la présente invention, on met à disposition des compositions d'acides levants présentant d'excellentes propriétés de dégagement contrôlé de gaz et de réaction avec les bases levantes au cours de diverses phases de la cuisson de pâtisseries. Les compositions acides sont caractérisées selon la revendication 1 est sont obtenues selon la revendication 3.

On y parvient habituellement en chauffant 100 parties de phosphate monocalcique à une température comprise entre environ 200°C et environ 310°C pendant une durée comprise entre environ 0,25 heure et environ 30 heures pour obtenir de 83 à 93 parties de produit.

Ledit mélange peut être utilisé pour préparer des gâteaux, des muffins, des beignets, du pain, de la pâtisserie, des cookies, des gâteaux au chocolat et aux noix, des hush puppies (sorte de beignet), des crêpes, des gaufres, de la pâte à pizza ou des petits pains.

La présente invention a, par conséquent, pour objet de mettre à disposition une composition pouvant être utilisée comme acide levant ayant une stabilité et des propriétés de dégagement de gaz excellentes.

La présente invention a encore pour objet de mettre à disposition un procédé de préparation de cette nouvelle composition d'acides levants.

Un autre objet de la présente invention est de mettre à disposition un mélange mettant en oeuvre la nouvelle composition d'acides levants.

Les objets ci-dessus de la présente invention et d'autres apparaîtront clairement à l'homme du métier qui se référera à la description détaillée du mode de réalisation préférentiel.

### Description détaillée du mode de réalisation préférentiel

Au cours de la description du mode de réalisation préférentiel, on utilisera pour plus de clarté une certaine terminologie qui est destinée à cerner le mode de réalisation décrit ainsi que tous les équivalents qui agissent d'une manière similaire dans un but similaire en vue d'obtenir un résultat similaire.

L'objectif principal de la présente invention est de développer des compositions d'acides levants qui présentent les propriétés recherchées de libération contrôlée de façon à ce que l'acide ne soit libéré que lorsque le moment voulu arrive au cours du cycle de cuisson. La libération du bioxyde de carbone doit intervenir soit lorsque l'on ajoute de l'eau à un mélange contenant la composition d'acides levants, soit lorsque la température augmente au cours du chauffage, soit lorsqu'il y a combinaison des deux effets.

A l'inverse, on tient à ce que l'acide ne provoque pas un dégagement prématuré de bioxyde de carbone pendant la préparation du mélange ou ultérieurement pendant la préparation de la pâte, par exemple, pendant la phase de pétrissage ou pendant son stockage avant la cuisson. La présente invention satisfait aux critères ci-dessus en soumettant la composition d'acide levant à base de phosphate monocalcique à un traitement permettant d'abaisser son indice de neutralisation à une valeur comprise entre 44 et environ 57, plus particulièrement encore entre environ 46 et environ 55.

L'acide levant qui fait l'objet de la présente invention peut être l'un des produits suivants : le phosphate monocalcique monohydraté et le phosphate monocalcique anhydre. On préfère utiliser plus particulièrement le phosphate monocalcique sous sa forme hydratée.

Le phosphate monocalcique a habituellement une granulométrie comprise entre environ 20 et environ 200 µm, les granulométries comprises entre environ 30 et environ 120 µm ou entre environ 50 et environ 200 µm étant disponibles dans le commerce.

Avant le traitement thermique selon la présente invention, l'indice de neutralisation du phosphate monocalcique est compris habituellement entre 80 et 85. Pour abaisser l'indice de neutralisation jusqu'au point où l'on peut utiliser tout seul l'acide levant à base de phosphate monocalcique comme acide levant multifonctionnel, on le chauffe tout simplement pendant une certaine durée de temps jusqu'à ce que son indice de neutralisation se situe entre environ 44 et environ 57.

La phase de chauffage se fait simplement en mettant en oeuvre des moyens de chauffage connus, tels que fours, vapeur, air pulsé ou convection, plat chaud, séchoir à tambour rotatif à lit fluidisé et autres similaires. Pour déterminer le moment où le phosphate monocalcique a atteint l'indice de neutralisation voulu, on peut mesurer la quantité de produit perdu pendant le chauffage. Dans la pratique, pour obtenir une composition ayant un indice de neutralisation compris entre environ 44 et 57, on chauffe jusqu'à ce que sa masse pèse entre 83 et environ 93 % de son poids de départ (c'est-à-dire que la perte au séchage (PAS) est comprise entre environ 7 et environ 17 %). On préfère même chauffer jusqu'au point où la quantité finale de produit obtenu pèse entre environ 83 et environ 89 % de sa masse initiale (la PAS est comprise entre 11 et 17). On obtient un produit remarquable lorsque la quantité finale de produit obtenu pèse entre environ 85 et environ 86,5 % de sa masse initiale (la PAS est comprise entre 13,5 et 15).

Les conditions de chauffage généralement mises en oeuvre impliquent le chauffage du phosphate monocalcique de départ de façon à ce que le produit atteigne une température comprise entre environ 200°C et environ 310°C et que le produit soit maintenu à cette température pendant une période de temps comprise entre environ 0,25 heure et environ 30 heures. La température de chauffage et la durée sont choisies de façon à obtenir les valeurs recommandées ci-dessus. Par exemple, lorsque la température du phosphate monocalcique est portée à environ 220°C, la durée du chauffage est comprise entre environ 20 et environ 30 heures. Lorsque la température du phosphate monocalcique est portée à environ 250°C, la durée du chauffage est comprise entre environ 2 et environ 5 heures. Lorsque la température du phosphate monocalcique est portée à environ 270°C, la durée du chauffage est comprise entre environ 1 et environ 2 heures. Lorsque la température du phosphate monocalcique est portée à environ 290°C, la durée du chauffage est comprise entre environ 0,75 heure et environ 1,50 heure et lorsque la température du phosphate monocalcique est portée à environ 310°C, la durée du chauffage est comprise entre environ 0, 50 et environ 0,75 heure.

Après avoir chauffé le phosphate monocalcique pendant la période de temps appropriée, on le refroidit et on le stocke dans des conditions telles que le produit ne puisse pas absorber d'humidité. Les conditions de stockage que l'on préfère particulièrement comprennent les emballages étanches à l'eau ou le stockage en présence d'un dessicatif.

Une fois qu'on les a obtenues, les nouvelles compositions d'acides levants selon la présente invention peuvent être incorporées dans les mélanges pour produits alimentaires dans lesquels les acides réagissent avec des bases, habituellement du bicarbonate de sodium, pour assurer la fonction levante que tout agent levant chimique ou biologique connu, telle que la levure, assurerait normalement. La composition levante chimique selon l'invention peut être incorporée dans un produit à base de poudre levante préparé de façon appropriée en mélangeant l'acide avec une base sous la forme d'un mélange de poudres sèches. Il est bien connu que les poudres levantes sous forme de poudre sèche les mieux préparées sont celles qui comportent des charges qui contribuent au volume de la poudre et en facilitent la mesure dans la pratique. Dans les poudres levantes selon la présente invention on met généralement en oeuvre des charges, tels que amidon, sulfate de calcium ou carbonate de calcium. Les agents de conservation et les charges habituels peuvent être mis en oeuvre conjointement avec la composition de poudre levante selon la présente invention comme il est connu dans l'art de la technique. Les exemples de produits alimentaires dans lesquels on peut incorporer les compositions selon l'invention comprennent, sans qu'il y ait la moindre limitation, les produits suivants : les gâteaux, y compris les gâteaux fourrés et les "pound cakes" (sorte de quatre-quarts), les muffins, les beignets, le pain, la pâtisserie, les cookies, la pâte à température ambiante, réfrigérée ou surgelée, les gâteaux au chocolat et aux noix, les hush puppies, les crêpes, les gaufres, la pâte à pizza ou les petits pains. Les produits alimentaires peuvent stockés à la température ambiante ou à des températures réduites, par exemple, dans les conditions de la réfrigération ou de la congélation.

Dans la pratique, lorsque l'on chauffe les mélanges, les acides levants qui représentent habituellement environ de 0,2 à 4,0 % en poids du mélange, se libèrent d'une manière que l'on peut contrôler et réagissent avec les bases pour donner un produit alimentaire qui a levé correctement. La mise en oeuvre du produit à base de phosphate monocalcique selon l'invention fournit un profil de libération tel que l'on obtient un produit levé de qualité particulièrement grande. La présente invention permet de mettre en oeuvre le phosphate monocalcique seul comme acide levant. Cela constitue une amélioration significative dans la mesure où il ne contient pas de sodium, n'a pas de goût et réagit avec une vitesse suffisamment lente pour donner les propriétés levantes recherchées.

Avec les compositions levantes selon la présente invention on peut préparer de la pâte fraîche de manière traditionnelle comme on l'a toujours fait dans ce domaine. Habituellement, on mélange les ingrédients à l'état sec et on peut les stocker pendant des périodes de temps normales. Il est préférable de réfrigérer les produits mélangés à sec s'il doit s'écouler un temps relativement long entre le mélange et la préparation de la pâte fraîche. Le mélange sec est mis en oeuvre pour préparer de la pâte fraîche par incorporation de liquides appropriés, tels que le lait et les matières grasses, comme il est connu de le faire dans ce domaine.

Comme il est connu de le faire dans ce domaine, on peut contrôler le pH recherché de la pâtisserie finale en incorporant dans la pâte fraîche des acides levants et des sources de carbonate alcalin que l'on utilise habituellement à cette fin dans ce domaine. En règle générale, le pH de la pâtisserie finale varie entre environ 5,5 et environ 9,0, de préférence entre environ 6,9 et environ 7,5. La quantité de carbonate alcalin ajoutée doit être suffisante pour que le pH se situe dans les limites précitées. Habituellement, on incorpore environ de 0,3 % à environ 3 % en poids d'agent alcalin alimentaire par rapport au poids des ingrédients en poudre mis en oeuvre.

On comprendra mieux l'invention si l'on se réfère aux exemples suivants.

### Exemple 1

On pèse avec précision 20 parties de phosphate monocalcique sous forme de monohydrate (MCP) dans une grande cocotte plate en porcelaine que l'on dispose dans un four à convection par gravité. Le four est chauffé de façon à ce que la température du produit dans le four atteigne 200°C et le produit est maintenu à cette température pendant 0,25 heure.

On mesure l'indice de neutralisation de ce produit en déterminant le nombre de parties en poids de bicarbonate de sodium qu'il faut pour neutraliser 100 parties de ladite composition. Cet indice figure dans le Tableau 1. Le MCP non traité (Regent 12XX) a un indice de neutralisation de 80 et le Levair qui est un aluminophosphate de sodium que l'on trouve dans le commerce et qui est largement reconnu pour ses excellentes propriétés de libération contrôlée possède un indice de neutralisation de 100.

On mesure la perte au séchage (% de PAS) en pesant le produit obtenu et en déterminant le pourcentage de produit perdu au cours du chauffage par rapport à la quantité initiale mise en oeuvre. Cette valeur figure dans le Tableau 1.

La vitesse de réaction dans la pâte (VRP) est un terme qui définit la vitesse de libération du bioxyde de carbone pendant le mélange et le stockage d'une pâte avant la cuisson. On la détermine en mesurant le volume de bioxyde de carbone dégagé par une formulation standard de pâte contenant des quantités connues d'acide levant et de bicarbonate de sodium à une température constante de 27°C dans un appareil de Chittick modifié. La VRP est souvent utilisée comme indication pour choisir le type d'acide levant convenant le mieux à une application pour un produit particulier. Une faible VRP, c'est-à-dire inférieure à 50 pendant des temps de réaction de 2, 6 et/ou de 10 à 15 minutes, tend à indiquer que la vitesse de réaction contrôlée est excellente.

Pour mesurer la quantité de CO₂ dégagé pendant une réaction avec le bicarbonate de sodium dans le cas de la composition de l'exemple 1, on introduit dans un autoclave (reaction bomb) 73,5 parties d'un semblant de mélange sec pour faire de la pâte contenant de la farine, de la poudre de lait écrémé, du sel et de la matière grasse, 0,75 parties de NaHCO et 0,93 parties de la composition selon l'exemple 1. On ajoute 43 parties d'eau et on mélange le tout. On met en oeuvre un appareil de Chittick modifié (ou tout autre appareil capable de mesurer le dégagement de gaz) et on mesure la quantité de CO₂ dégagé par rapport à la quantité totale disponible pouvant être dégagée (VRP) après 1, 2, 4, 6, 8, 10, 12 et 15 minutes. Les VRP sont indiquées dans le Tableau 2 ainsi que celles du Regent 12 XX et du Levair.

Pour vérifier si la composition d'acides levants selon l'exemple donne satisfaction dans les mélanges pour pâtisseries, on a préparé le mélange suivant pour gâteau jaune :

| | |
|---|---|
| Farine pâtissière | 236,00 parties |
| Sucre semoule | 280,84 parties |
| Matière grasse | 53,57 parties |
| Lait écrémé en poudre | 18,17 parties |
| Jaune d'oeuf en poudre | 22,89 parties |
| Blanc d'oeuf en poudre | 9,20 parties |
| NaCl | 6,37 parties |
| Composition d'acide levant selon l'invention | 9,0-13,0 parties |
| Bicarbonate de sodium | 5,66 parties |
| Amidon de froment prégélatinisé | 2,60 parties |
| Emulsifiant | 5,00 parties |

On prépare une pâte liquide en ajoutant tout d'abord le mélange et 170,00 parties d'eau, puis 142,00 parties d'eau. On introduit immédiatement la pâte dans un moule, on cuit à 190,6°C (375°F) pendant 25 minutes et on obtient un gâteau jaune.

Pour déterminer si les pâtes ci-dessus sont capables de donner des gâteaux de haute qualité après cuisson, on a procédé à des analyses quantitatives en mettant en oeuvre les critères suivants : densité spécifique de la pâte, volume spécifique du gâteau et pH du gâteau. On considère qu'un volume spécifique de 3,25 peut être accepté dans le commerce. Les valeurs de ces critères sont données dans le Tableau 1.

A titre de première comparaison, on notera que le gâteau préparé avec le produit Regent 12 XX a un volume spécifique de 2,59 et que le gâteau préparé avec le produit Levair a un volume spécifique de 3,55.

### Exemples 2-47

On procède comme dans l'exemple 1, l'exception étant que l'on met en oeuvre les conditions de chauffage (température et durée) indiquées dans le Tableau 1 et que dans les exemples 20-23 et 34-47, on met en oeuvre 100 parties de phosphate monocalcique monohydraté. Le Tableau 1 indique également les pertes au séchage (% de PAS), l'indice de neutralisation (IN), la densité spécifique de la pâte liquide (densité spéc.), le volume spécifique du gâteau (vol. spéc.) et le pH du gâteau (pH).

Les VRP concernant les exemples 2-19 et 24-33 sont données dans le Tableau 2.

**TABLEAU 1**

| Exemple | Temp. (°C) | Durée (h) | % PAS | IN | Volume spéc. | Densité spéc. | pH |
|---|---|---|---|---|---|---|---|
| Levair | -- | - - | - - | 100 | 3,55 | 0,92 | 7,79 |
| Regent 12XX | -- | -- | -- | 78 | 2,59 | 0,86 | 7,34 |
| 1 | 200 | 0,25 | 7,6 | 67 | 2,67 | 0,85 | 7,21 |
| 2 | 200 | 0,50 | 8,0 | 66 | 2,74 | 0,85 | 7,16 |
| 3 | 200 | 1,00 | 8,2 | 65 | 2,75 | 0,87 | 7,19 |
| 4 | 200 | 1,50 | 8,3 | 66 | 2,80 | 0,85 | 7,16 |
| 5 | 200 | 2,00 | 8,3 | 67 | 3,11 | 0,77 | 7,12 |
| 6 | 200 | 3,00 | 8,4 | 67 | 3,18 | 0,77 | 7,16 |
| 7 | 200 | 7,00 | 8,6 | 66 | 3,18 | 0,74 | 7,09 |
| 8 | 200 | 17,00 | 9,0 | 65 | 3,18 | 0,75 | 7,07 |
| 9 | 200 | 20,00 | 9,0 | 65 | 3,27 | 0,74 | 7,07 |
| 10 | 220 | 0,25 | 7,5 | 67 | 2,64 | 0,83 | 7,13 |
| 11 | 220 | 0,50 | 8,3 | 66 | 2,73 | 0,83 | 7,17 |
| 12 | 220 | 1,00 | 8,7 | 65 | 2,88 | 0,81 | 7,14 |
| 13 | 220 | 1,50 | 8,8 | 66 | 3,06 | 0,79 | 7,12 |
| 14 | 220 | 2,00 | 8,9 | 65 | 3,05 | 0,78 | 7,12 |
| 15 | 220 | 3,00 | 9,3 | 63 | 3,29 | 0,75 | 7,15 |
| 16 | 220 | 5,00 | 9,5 | 62 | 3,31 | 0,76 | 7,13 |
| 17 | 220 | 7,00 | 9,9 | 62 | 3,31 | 0,76 | 7,18 |
| 18 | 220 | 17,00 | 10,9 | 59 | 3,42 | 0,78 | 7,32 |
| 19 | 220 | 20,00 | 11,2 | 58 | 3,46 | 0,80 | 7,33 |
| 20 | 220 | 22,00 | 12,9 | 54 | 3,29 | 0,87 | 7,51 |
| 21 | 220 | 24,00 | 13,0 | 53 | 3,37 | 0,89 | 7,49 |
| 22 | 220 | 26,00 | 13,1 | 51 | 3,46 | 0,91 | 7,50 |
| 23 | 220 | 28,00 | 13,3 | 52 | 3,41 | 0,90 | 7,50 |
| 24 | 250 | 0,25 | 7,6 | 65 | 3,00 | 0,82 | 7,21 |
| 25 | 250 | 0,50 | 10,3 | 61 | 3,29 | 0,78 | 7,29 |
| 26 | 250 | 1,00 | 11,3 | 59 | 3,36 | 0,79 | 7,41 |
| 27 | 250 | 1,50 | 13,9 | 56 | 3,49 | 0,81 | 7,61 |
| 28 | 250 | 2,00 | 13,3 | 54 | 3,57 | 0,87 | 7,50 |
| 29 | 250 | 3,00 | 13,6 | 53 | 3,50 | 0,90 | 7,54 |
| 30 | 250 | 5,00 | 14,1 | 51 | 3,53 | 0,98 | 7,75 |
| 31 | 250 | 7,00 | 14,7 | 51 | 3,45 | 0,91 | 7,78 |
| 32 | 250 | 17,00 | 14,9 | 50 | 3,51 | 0,96 | 8,99 |
| 33 | 250 | 20,00 | 15,5 | 48 | 3,37 | 0,98 | 8,65 |
| 34 | 270 | 0,50 | 9,8 | 59 | 3,11 | 0,80 | 7,09 |
| 35 | 270 | 1,00 | 13,9 | 50 | 3,53 | 0,85 | 7,15 |
| 36 | 270 | 1,50 | 14,6 | 46 | 3,62 | 0,92 | 7,10 |
| 37 | 270 | 2,00 | 15,1 | 44 | 3,56 | 0,92 | 7,15 |
| 38 | 290 | 0,50 | 11,0 | 63 | 3,32 | 0,80 | 7,37 |
| 39 | 290 | 0,75 | 12,9 | 57 | 3,39 | 0,85 | 7,55 |
| 40 | 290 | 1,00 | 14,9 | 52 | 3,52 | 0,92 | 7,50 |
| 41 | 290 | 1,25 | 15,4 | 52 | 3,43 | 0,93 | 8,31 |
| 42 | 290 | 1,50 | 15,5 | 52 | 3,37 | 0,94 | 8,17 |
| 43 | 310 | 0,25 | 9,3 | 67 | 2,81 | 0,85 | 7,23 |
| 44 | 310 | 0,50 | 13,9 | 55 | 3,50 | 0,89 | 7,77 |
| 45 | 310 | 0,75 | 15,2 | 53 | 3,36 | 0,93 | 8,51 |
| 46 | 310 | 1,00 | 15,8 | 52 | 3,00 | 0,94 | 9,31 |
| 47 | 310 | 1,25 | 16,0 | 49 | 2,94 | 0,93 | 9,38 |

**TABLEAU 2**

| PROFIL DE LA VRP DES PRODUITS SELON L'EXEMPLE | | | | | | | | |
|---|---|---|---|---|---|---|---|---|
| EXEMPLE | 1 mn | 2 mn | 4 mn | 6 mn | 8 mn | 10 mn | 12 mn | 15 mn |
| REGENT 12XX | 57,1 | 61,9 | 64,4 | 65,3 | 65,8 | 66,0 | 66,3 | 66,7 |
| LEVAIR | 21,6 | 23,7 | 26,5 | 28,3 | 29,9 | 31,5 | 32,7 | 34,5 |
| 1 | 61,3 | 65,6 | 67,9 | 69,0 | 69,7 | 70,2 | 70,6 | 71,1 |
| 2 | 57,0 | 62,0 | 64,2 | 65,4 | 66,1 | 66,3 | 66,5 | 67,0 |
| 3 | 48,5 | 59,5 | 63,8 | 65,4 | 66,1 | 66,8 | 67,2 | 67,7 |
| 4 | 48,1 | 57,9 | 61,5 | 62,9 | 63,6 | 63,8 | 63,8 | 64,0 |
| 5 | 43,5 | 56,0 | 61,5 | 63,1 | 63,8 | 64,2 | 64,5 | 64,7 |
| 6 | 38,3 | 51,5 | 58,3 | 59,9 | 60,8 | 61,5 | 62,0 | 62,2 |
| 7 | 36,5 | 50,3 | 59,2 | 61,1 | 62,0 | 62,4 | 62,9 | 63,3 |
| 8 | 30,5 | 44,2 | 54,9 | 57,9 | 59,2 | 59,9 | 60,6 | 61,1 |
| 9 | 30,5 | 44,2 | 55,1 | 58,3 | 59,3 | 60,1 | 60,8 | 61,5 |
| 10 | 59,8 | 65,3 | 67,6 | 68,8 | 69,5 | 69,7 | 70,0 | 70,2 |
| 11 | 40,0 | 54,3 | 61,4 | 63,7 | 64,9 | 65,8 | 66,3 | 66,7 |
| 12 | 32,7 | 47,4 | 58,4 | 61,2 | 62,4 | 63,0 | 63,5 | 64,4 |
| 13 | 30,1 | 44,9 | 56,8 | 60,3 | 61,7 | 62,6 | 63,0 | 63,7 |
| 14 | 30,1 | 44,4 | 55,9 | 58,4 | 59,8 | 60,7 | 61,2 | 61,7 |
| 15 | 28,1 | 41,4 | 55,7 | 59,8 | 61,4 | 62,6 | 63,3 | 64,0 |
| 16 | 27,2 | 39,8 | 53,6 | 58,0 | 59,8 | 60,7 | 61,7 | 62,4 |
| 17 | 26,5 | 38,4 | 53,2 | 57,5 | 59,8 | 61,0 | 61,7 | 62,6 |
| 18 | 24,4 | 33,4 | 45,8 | 50,2 | 52,0 | 53,2 | 53,8 | 54,8 |
| 19 | 24,9 | 33,1 | 44,6 | 48,8 | 50,6 | 51,8 | 52,5 | 53,6 |
| 24 | 31,3 | 45,4 | 57,1 | 60,1 | 61,5 | 62,4 | 63,1 | 63,8 |
| 25 | 29,0 | 40,1 | 50,5 | 53,5 | 55,1 | 56,0 | 56,7 | 57,4 |
| 26 | 24,9 | 33,2 | 44,2 | 48,4 | 50,2 | 51,4 | 52,1 | 53,0 |
| 27 | 24,0 | 28,8 | 37,6 | 41,7 | 44,0 | 45,6 | 46,5 | 47,9 |
| 28 | 21,7 | 25,3 | 31,3 | 34,1 | 36,4 | 37,8 | 38,7 | 40,1 |
| 29 | 20,7 | 23,5 | 28,1 | 30,4 | 32,3 | 33,4 | 34,3 | 35,5 |
| 30 | 19,8 | 21,9 | 25,1 | 26,7 | 27,8 | 28,5 | 29,0 | 29,9 |
| 31 | 17,9 | 19,8 | 21,6 | 22,5 | 23,5 | 24,4 | 24,9 | 25,5 |
| 32 | 18,4 | 19,8 | 21,4 | 22,5 | 23,4 | 23,9 | 24,1 | 24,8 |
| 33 | 17,9 | 18,8 | 19,8 | 20,2 | 21,1 | 21,6 | 22,1 | 22,3 |

### Discussion des résultats obtenus

Les résultats ci-dessus montrent que les compositions à base de phosphate monocalcique ayant subi un traitement thermique de façon à ce que l'indice de neutralisation de la composition obtenue soit compris entre 44 et 57 et plus particulièrement encore entre 46 et 55 donnent des acides levants qui présentent d'excellentes propriétés de libération contrôlée, ce qui permet d'obtenir des gâteaux ayant un volume spécifique important. Lesdits indices de neutralisation correspondent à une perte au séchage comprise entre environ 7 et 17 %, la préférence allant plus particulièrement à la perte comprise entre environ 11 et 16 %. Dans presque tous les exemples où le phosphate monocalcique a été chauffé, les propriétés obtenues sont supérieures à celles du phosphate monocalcique non traité (Regent 12XX).

Les résultats obtenus montrent encore que c'est la combinaison de la température et de la durée du chauffage qu'il faudrait contrôler pour obtenir des compositions satisfaisantes. Par exemple, en ce qui concerne la production de gâteaux présentant d'excellents volumes spécifiques, on obtient à 220°C d'excellents résultats lorsque l'on chauffe le phosphate monocalcique pendant une durée comprise entre 20 et 28 heures (exemples 19-23). A 250°C, on obtient d'excellents résultats lorsque l'on chauffe le phosphate monocalcique pendant une durée de 2 à 5 heures (exemples 28-30). A 270°C, on obtient d'excellents résultats lorsque l'on chauffe le phosphate monocalcique pendant une durée de 1 à 2 heures (exemples 35-37). A 290°C, on obtient d'excellents résultats lorsque l'on chauffe le phosphate monocalcique pendant une durée de 0,75 à 1,5 heures (exemples 39-42) et à 310°C, les résultats sont excellents lorsque l'on chauffe le phosphate monocalcique pendant une durée de 0,50 à 0,75 heure (exemples 44-45).

Lorsqu'on les compare dans certaines conditions de chauffage à un aluminophosphate de sodium commercialisé avec succès, à savoir le Levair, fabriqué par Rhône-Poulenc Inc., les produits selon l'invention donnent des résultats comparables, mais ils ne contiennent ni sodium, ni aluminium. Lorsque l'on regarde la Figure, on remarque que les compositions suivantes selon l'invention des profils de libération contrôlée comparables à celle du Levair : exemple 29, exemple 30, exemple 36, exemple 40 et exemple 44. Chacun de ces produits a un indice de neutralisation compris entre 46 et 55, la perte au séchage étant comprise entre 13,6 et 14,9. A titre de référence, on présente aussi le profil de libération contrôlée du phosphate monocalcique non traité, à savoir le Regent 12XX. Ses propriétés de libération sont trop rapides pour qu'on puisse le considérer comme susceptible de pouvoir être mis en oeuvre seul dans de multiples applications où l'on fait lever des pâtes.

En résumé, la présente invention permet d'obtenir une composition d'acide levant qui est facile à produire, réduit au minimum les risques pour la santé, n'a pas de goût et n'exige aucun mélange avec d'autres acides levants.

## Revendications

1. Composition comprenant un acide levant à base de phosphate monocalcique ayant un indice de neutralisation compris entre 44 et 57, l'indice de neutralisaion représentant la quantité en poids de bicarbonate de sodium nécessaire pour neutraliser 100 parties en poids dudit acide levant à base de phosphate monocalcique,
et susceptible d'être obtenue par un procédé dans lequel on chauffe le phosphate monocalcique hydraté à une température élevée pendant une période de temps appropriée de façon à ce que le poids de la composition d'acide levant que l'on obtient soit compris entre 85 et 86,5 % du poids avant chauffage, la perte au séchage étant comprise entre 13,5 et 15%.

2. Composition selon la revendication 1, **caractérisée en ce qu'**elle comprend un acide levant à base de phosphate monocalcique ayant un indice de neutralisation compris entre 46 et 55.

3. Procédé de préparation d'une composition comprenant un acide levant à base de phosphate monocalcique ayant un indice de neutralisation compris entre 44 et 57, l'indice de neutralisaion représentant la quantité en poids de bicarbonate de sodium nécessaire pour neutraliser 100 parties en poids dudit acide levant à base de phosphate monocalcique, dans lequel on chauffe le phosphate monocalcique hydraté à une température élevée pendant une période de temps appropriée de façon à ce que le poids de la composition d'acide levant que l'on obtient soit compris entre 85 et 86,5 %, du poids avant chauffage, la perte au séchage étant comprise entre 13,5 et 15°.

4. Procédé de préparation d'une composition selon la revendication 3, dans lequel on chauffe le phosphate monocalcique à une température comprise entre 200°C et 310°C pendant une période de temps comprise entre 0,25 et 30 heures.

5. Procédé selon l'une des revendications 3 ou 4, caractétrisé en ce que l'on chauffe le phosphate monocalcique à une température de 220°C pendant une période de temps comprise entre 20 et 30 heures.

6. Procédé selon l'une des revendications 3 ou 4, caractétrisé en ce que l'on chauffe le phosphate monocalcique à une température de 250°C pendant une période de temps comprise entre 2 et 5 heures.

7. Procédé selon l'une des revendications 3 ou 4, caractétrisé en ce que l'on chauffe le phosphate monocalcique à une température de 270°C pendant une période de temps comprise entre 1 et 2 heures.

8. Procédé selon l'une des revendications 3 ou 4, caractétrisé en ce que l'on chauffe le phosphate monocalcique à une température de 290°C pendant une période de temps comprise entre 0,75 et 1,50 heure.

9. Procédé selon l'une des revendications 3 ou 4, caractétrisé en ce que l'on chauffe le phosphate monocalcique à une température de 310°C pendant une période de temps comprise entre 0,50 et 0,75 heure.

10. Mélange pâtissier destiné à la préparation d'une pâtisserie comprenant un acide levant selon l'une des revendications 1 ou 2.

11. Mélange pâtissier selon la revendication 10 mis en oeuvre pour obtenir des gâteaux, des muffins, des beignets, du pain, de la pâtisserie, des cookies, de la pâte à température ambiante, réfrigérée ou surgelée, des gâteaux au chocolat et aux noix, des hush puppies, des crêpes, des gaufres, de la pâte à pizza ou des petits pains.

12. Mélange pâtissier selon la revendication 10 dont l'acide levant représente de 0,2 à 4,0 % en poids du mélange.

## Patentansprüche

1. Zusammensetzung, umfassend eine Treibmittel-Säure auf der Basis von Monocalciumphosphat mit einem Neutralisationsindex zwischen 44 und 57, wobei der Neutralisationsindex die Gewichtsmenge von Natriumbicarbonat darstellt, die erforderlich ist, um 100 Gewichtsteile der genannten Treibmittel-Säure auf der Basis von Monocalciumphosphat zu neutralisieren, und die Zusammensetzung geeignet ist, durch ein Verfahren erhalten zu werden, bei dem man das hydratisierte Monocalciumphosphat während einer geeigneten Zeitdauer in der Weise auf eine erhöhte Temperatur erhitzt, daß das Gewicht der Zusammensetzung der Treibmittel-Säure, die man erhält, zwischen 85 und 86,5 % des Gewichts vor dem Erhitzen beträgt, wobei der Trockenverlust zwischen 13,5 und 15 % liegt.

2. Zusammensetzung nach Anspruch 1, **dadurch gekennzeichnet, daß** sie eine Treibmittel-Säure auf der Basis von Monocalciumphosphat mit einem Neutralisationsindex zwischen 46 und 55 umfaßt.

3. Verfahren zur Herstellung einer Zusammensetzung, umfassend eine Treibmittel-Säure auf der Basis von Monocalciumphosphat mit einem Neutralisationsindex zwischen 44 und 57, wobei der Neutralisationsindex die Gewichtsmenge von Natriumbicarbonat darstellt, die erforderlich ist, um 100 Gewichtsteile der genannten Treibmittel-Säure auf der Basis von Monocalciumphosphat zu neutralisieren, bei dem man das hydratisierte Monocalciumphosphat während einer geeigneten Zeitdauer in der Weise auf eine erhöhte Temperatur erhitzt, daß das Gewicht der Zusammensetzung der Treibmittel-Säure, die man erhält, zwischen 85 und 86,5 % des Gewichtes vor dem Erhitzen beträgt, wobei der Trockenverlust zwischen 13,5 und 15 % liegt.

4. Verfahren zur Herstellung einer Zusammensetzung nach Anspruch 3, bei dem man das Monocalciumphosphat während einer Zeitdauer zwischen 0,25 und 30 Stunden auf eine Temperatur zwischen 200 °C und 310 °C erhitzt.

5. Verfahren nach einem der Ansprüche 3 oder 4, **dadurch gekennzeichnet, daß** man das Monocalciumphosphat während einer Zeitdauer zwischen 20 und 30 Stunden auf eine Temperatur von 220 °C erhitzt.

6. Verfahren nach einem der Ansprüche 3 oder 4, **dadurch gekennzeichnet, daß** man das Monocalciumphosphat während einer Zeitdauer zwischen 2 und 5 Stunden auf eine Temperatur von 250 °C erhitzt.

7. Verfahren nach einem der Ansprüche 3 oder 4, **dadurch gekennzeichnet, daß** man das Monocalciumphosphat während einer Zeitdauer zwischen 1 und 2 Stunden auf eine Temperatur von 270 °C erhitzt.

8. Verfahren nach einem der Ansprüche 3 oder 4, **dadurch gekennzeichnet, daß** man das Monocalciumphosphat während einer Zeitdauer zwischen 0,75 und 1,50 Stunden auf eine Temperatur von 290 °C erhitzt.

9. Verfahren nach einem der Ansprüche 3 oder 4, **dadurch gekennzeichnet, daß** man das Monocalciumphosphat während einer Zeitdauer zwischen 0,50 und 0,75 Stunden auf eine Temperatur von 310 °C erhitzt.

10. Backmischung für die Herstellung eines Feingebäcks, umfassend eine Treibmittel-Säure nach einem der Ansprüche 1 oder 2.

11. Backmischung nach Anspruch 10, eingesetzt zur Herstellung von Kuchen, Muffins, Beignets, Brot, Feingebäck, Keksen, gekühltem, tiefgefrorenem Teig oder solchem von Umgebungstemperatur, Kuchen mit Schokolade und Nüssen, Hush puppies, Crêpes, Waffeln, Pizzateig oder Brötchen.

12. Backmischung nach Anspruch 10, bei der die Treibmittel-Säure 0,2 bis 4,0 % des Gewichtes der Mischung ausmacht.

## Claims

1. A composition comprising a leavening acid based on monocalcium phosphate with a neutralising value in the range 44 to 57, the neutralising value representing the quantity of sodium bicarbonate required to neutralise 100 parts by weight of said monocalcium phosphate-based leavening acid,
and obtainable by a process in which hydrated monocalcium phosphate is heated to a high temperature for a suitable period so that the weight of the leavening acid composition obtained is in the range 85% to 86.5% of the weight prior to heating, the loss on drying being in the range 13.5% to 15%.

2. A composition according to claim 1, **characterized in that** it comprises a monocalcium phosphate-based leavening acid with a neutralising value in the range 46 to 55.

3. A process for preparing a composition comprising a monocalcium phosphate-based leavening acid with a neutralising value in the range 44 to 57, the neutralising value representing the quantity of sodium bicarbonate required to neutralise 100 parts by weight of said monocalcium phosphate-based leavening acid, in which hydrated monocalcium phosphate is heated to a high temperature for a suitable period so that the weight of the leavening acid composition obtained is in the range 85% to 86.5% of the weight prior to heating, the loss on drying being in the range 13.5% to 15%.

4. A process for preparing a composition according to claim 3, in which the monocalcium phosphate is heated to a temperature in the range 200°C to 310°C for a period in the range 0.25 to 30 hours.

5. A process according to claim 3 or claim 4, **characterized in that** the monocalcium phosphate is heated to a temperature of 220°C for a period in the range 20 to 30 hours.

6. A process according to claim 3 or claim 4, **characterized in that** the monocalcium phosphate is heated to a temperature of 250°C for a period in the range 2 to 5 hours.

7. A process according to claim 3 or claim 4, **characterized in that** the monocalcium phosphate is heated to a temperature of 270°C for a period in the range 1 to 2 hours.

8. A process according to claim 3 or claim 4, **characterized in that** the monocalcium phosphate is heated to a temperature of 290°C for a period in the range 0.75 to 1.50 hours.

9. A process according to claim 3 or claim 4, **characterized in that** the monocalcium phosphate is heated to a temperature of 310°C for a period in the range 0.50 to 0.75 hours.

10. A confectionery mixture intended for the preparation of confectionery comprising a leavening acid according to claim 1 or claim 2.

11. A cooking mixture according to claim 10 employed to obtain cakes, muffins, doughnuts, bread, pastries, cookies, room temperature, refrigerated or frozen dough, chocolate and nut cakes, hush puppies, pancakes, waffles, pizza dough or bread rolls.

12. A cooking mixture according to claim 10 in which the leavening acid represents 0.2% to 4.0% by weight of mixture.
